# EUROPEAN PATENT APPLICATION

(11) **EP 3 473 315 A1**
(43) Date of publication of application: **24.04.2019**
(21) Application number: 18192639.5
(22) Date of filing: 05.09.2018
(51) Int. Cl.: B01D 1/14, B01D 3/34, B01J 19/32, F28F 25/08, F24F 5/00, F24F 6/02, F28C 1/00

(54) **EVAPORATIVE MEDIA PAD WITH REDUCED INTERNAL SPACING**

(30) Priority: 20.10.2017 US 201715788958
(71) Applicant: Seeley International Pty Ltd, Lonsdale, SA 5160 (AU)
(72) Inventor: Seeley, Frederic Frank, Seaton, South Australia 5023 (AU); Schwarz, Paul, Hawthorn, South Australia 5062 (AU)
(74) Representative: FRKelly

(57) **Abstract**

Evaporative media pads for direct evaporative cooling systems and, in particular, evaporative media pads that have a reduced internal spacing to increase cooling capacity. In one embodiment, an evaporative media pad includes a plurality of sheets, each of the plurality of sheets including a plurality of flutes, each of the plurality of flutes having a flute height of at most 4.5 mm. In one embodiment, the flute height is at most 4 mm.

## Description

### TECHNICAL FIELD

The present invention relates to evaporative media pads for direct evaporative coolers and, in particular, to evaporative media pads that have a reduced internal spacing to increase cooling capacity.

### BACKGROUND

Evaporative coolers reduce the temperature of air flowing therethrough by evaporation of water. One commonly used evaporative cooling system is a direct evaporative cooling system (sometimes referred to as a swamp cooler), in which dry warm air enters an inlet side of the system, flows through one or more wetted evaporative media pads, and exits as cooled humidified air from the outlet side of the system.

Direct evaporative cooling systems include a water distribution system for wetting the evaporative media pad(s). Most commonly, distribution components (for example, distribution bars or trays with nozzles or apertures) of the water distribution system are located above the evaporative media pad(s) such that water is gravity fed downward from the distribution components to the evaporative media pad(s). In some systems, the evaporative media pad(s) are composed of one or more materials that are capable of being saturated with water and are formed to include a plurality of air channels. The air entering the system (referred to herein as "supply air") passes through the air channels and comes into contact with the water on and within the saturated evaporative media pad(s).

This contact between the flowing supply air and the water in the saturated evaporative media pad(s) causes the water to evaporate. The sensible heat in the supply air provides the energy required to change the water from a liquid to a vapor, and the resulting vapor has an equal amount of latent heat. As the supply air and the vapor have the same enthalpy, this process is referred to as an isenthalpic or adiabatic process. The resulting vapor (referred to herein as "exhaust air") has more latent heat and less sensible heat, that is, it has a lower temperature, than the supply air. Put another way, the temperature of the exhaust air reduced without altering the total amount of heat in the air. As warmer air can retain more moisture than cooler air, the exhaust air also has a higher relative humidity than the supply air.

Factors that affect the efficiency of the direct evaporative cooling system include: surface area and/or thickness of the evaporative media pad(s); the material(s) from which the evaporative media pad(s) are composed; flow rate, temperature, and/or relative humidity of the supply air; volume of water used to wet the evaporative media pad(s); number of sheets or layers that make up each evaporative media pad; and flute height of each sheet or layer within each evaporative media pad. For example, it has been found that a paper evaporative media pad has a higher saturation efficiency than an evaporative media pad composed of metal or plastic. As a further example, it has been found that thicker evaporative media pads increase contact time between air and water, which can enhance cooling efficiency; however, thicker evaporative media pads produce an increased static pressure drop (that is, an increased resistance to air flow), which can require the use of more power or energy input to maintain optimal air flow volume and speed. Thus, a number of factors must be balanced to achieve effective cooling.

### SUMMARY

The present invention relates to evaporative media pads for direct evaporative coolers and, in particular, to evaporative media pads that have a reduced internal spacing to increase cooling capacity. In one embodiment, an evaporative media pad includes a plurality of sheets, each of the plurality of sheets including a plurality of flutes, each of the plurality of flutes having a flute height of at most 4.5 mm.

In one aspect of the embodiment, the flute height is between 3 mm and 4.5 mm. In one aspect of the embodiment, the flute height is between 3.5 mm and 4.25 mm. In one aspect of the embodiment, the flute height is between 3.75 mm and 4 mm.

In one aspect of the embodiment, each of the plurality of sheets is composed of cellulose paper.

In one embodiment, an evaporative cooling system includes air-water contact body includes a plurality of sheets, each of the plurality of sheets having a plurality of undulations, each of the plurality of undulations having a height of at most 4 mm. The evaporative cooling system also includes a fluid distribution system configured to deliver fluid to the air-water contact body.

In one aspect of the embodiment, the height is between 3 mm and 4 mm. In one aspect of the embodiment, the height is 3.5 mm and 4 mm. In one aspect of the embodiment, the height is between 3.75 mm and 4 mm.

In one aspect of the embodiment, each of the linear undulations extends in a direction that is at an angle from horizontal.

In one aspect of the embodiment, the air-water contact body is assembled such that alternating sheets of the plurality of sheets include linear undulations extending in a first direction and at a first angle from horizontal and intervening sheets of the plurality of sheets between the alternating sheets of the plurality of sheets include linear undulations extending in a second direction and at a second angle from horizontal.

In one aspect of the embodiment, the first direction and the second direction are different, and the first angle and the second angle are the same.

In one aspect of the embodiment, the first direction and the second direction are different, and the first angle and the second angle are different.

In one aspect of the embodiment, the air-water contact body is an evaporative media pad.

In one aspect of the embodiment, the evaporative media pad is composed of cellulose paper.

In one aspect of the embodiment, the plurality of sheets are assembled such that the plurality of linear undulations of adjacent sheets are in contact with each other.

In one embodiment, an evaporative media pad for use in a direct evaporative cooling system includes: a plurality of sheets, each of the plurality of sheets lying in a plane and including: a first plurality a plurality of flutes extending in a first direction from the plane, each of the first plurality of flutes having a zenith point; and a second plurality of flutes extending in a second direction from the plane opposite the first direction, each of the second plurality of flutes having a zenith point, the distance between zenith points of adjacent flutes being at most 4 mm.

In one aspect of the embodiment, the distance between zenith points of adjacent flutes is at least 3 mm. In one aspect of the embodiment, the distance between zenith points of adjacent flutes is at least 3.5 mm. In one aspect of the embodiment, the distance between zenith points of adjacent flutes is at least 3.75 mm.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 shows a portion of an exemplary direct evaporative cooling system, including an evaporative media pad and water distribution system;
FIG. 2 shows a close-up view of a portion of an evaporative media pad with reduced internal spacing; and
FIG. 3 shows a cross-sectional view of a sheet of an evaporative media pad with reduced internal spacing.

### DETAILED DESCRIPTION

The system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

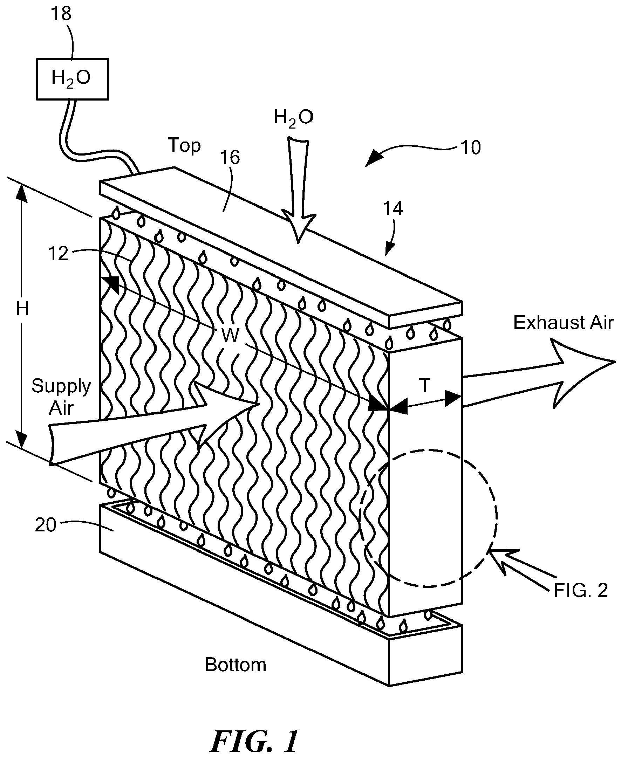

Referring now to FIG. 1, a portion of an exemplary evaporative cooling system is shown. The evaporative cooling system 10 generally includes one or more contact bodies for providing a water-air contact surface. In one embodiment, the contact body is an evaporative media pad 12. The evaporative cooling system 10 also includes a water distribution system 14. The water distribution system 14 includes a water distribution element 16 above the evaporative media pad 12, which includes one or more nozzles or apertures (not shown), a water source 18, and a water collection reservoir 20 beneath the evaporative media pad. In this configuration, water is delivered to the upper surface of the evaporative media pad 12 from the water distribution element 16, water flows downward through the evaporative media pad 12 by gravity distribution, then flows out of the bottom of the evaporative media pad 12 and into the water collection reservoir 20. Water is then recirculated through the water distribution system 14 to the water distribution element 16 and/or is drained from the system 10. Although the evaporative cooling system 10 is discussed herein as including water as the wetting fluid, it will be understood that another suitable fluid may be used instead of or in addition to water. Likewise, one or more additives or other compounds may be added to the water to enhance cooling efficiency and/or operation of the system 10.

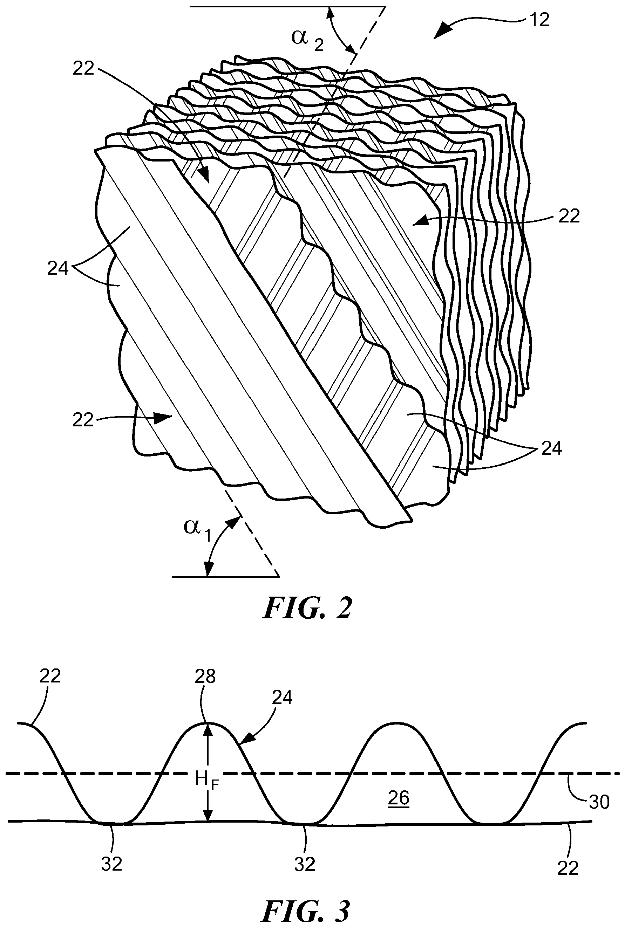

Although one evaporative media pad 12 is shown in FIG. 1, the evaporative cooling system 10 may include any number and configuration of evaporative media pads 12. Each evaporative media pad 12 has a height *H,* width *W,* and thickness *T.* Further, as shown in more detail in FIG. 2, each evaporative media pad 12 is made up of a plurality of sheets or layers 22. Each sheet in formed to include a plurality of undulations or flutes 24 that are linear, or at least substantially linear, and extend across an entirety of the sheet 22 (that is, from one edge of the sheet 22 to another edge of the sheet 22) at an angle to the edges of the sheet 22. When the evaporative media pad 12 is assembled, the flutes 24 create air channels 26 through the evaporative media pad 12. In one embodiment, the sheets 22 are arranged such that the flutes 24 extend of adjacent sheets 22 extend in opposite directions to create a cross-flow arrangement of air channels 26. Put another way, the sheets 22 are arranged such that the flutes 24 have alternating angles of incidence on the horizontal and do not coincide. FIG. 3 shows a close-up view of a portion of the evaporative media pad 12, with a portion of a first sheet 22 and a portion of a second sheet 22 removed so the relationship of the flutes 24 of adjacent sheets 22 can be seen. The flutes 24 of adjacent sheets 22 may extend at the same angle or at different angles from the straight edge of the sheet 22. In one embodiment, the flutes 24 of the first sheet 22 have a first angle of incidence α₁ and the flutes 24 of the second or adjacent sheet 22 have a second angle of incidence α₂ that is different than the first angle of incidence α₁. In one embodiment, the flutes 24 with the steepest angles are presented to the flow of the supply air to provide the greatest amount of water-air contact and to help prevent water droplet carryover. The flutes may have any suitable angle to the horizontal, such as 15°, 30°, 45°, 60°, or 75°. The sheets 22 are composed of any suitable material, such as cellulose paper, cellulose composite, natural fibers, wood, plastic, polyvinylchloride (PVC), glass, and/or metal.

Referring now to FIG. 3, a cross-sectional view of a sheet 22 of the evaporative media pad 12 of FIG. 2 is shown. As described above, each sheet 22 is formed to include a plurality of flutes 24, which function as air channels 26 when the evaporative media pad 12 is assembled. The horizontal line in FIG. 3 represents an adjacent sheet 22, which, although not shown, also includes a plurality of flutes 24. The sheets 22 are arranged such that the flutes 24 of adjacent sheets 22 are in contact with each other. Each flute 24 has a flute height *H_{F}.* The flute height *H_{F}* is a distance between the highest point 28 of the interior of the flute 24 (zenith point) extending in a first direction from the plane 30 in which the sheet 22 lies and the lowest point 32 of an adjacent flute 24 (nadir point) extending in a second direction opposite the first direction from the plane 30 in which the sheet 22 lies. Although FIG. 3 shows points 32 as being the lowest point of a flute 24, it will be understood that this is also be the highest point 28 of that flute 24 when the sheet 22 is rotated by 180°. So, put another way, the flute height *H_{F}* is the distance between the highest points 28 of adjacent flutes 24. When the evaporative media pad 12 is assembled, the flute height *H_{F}* helps determine the overall size of the air channel 26 formed between adjacent sheets 22. The exact size, or inner diameter, of the air channel 26 will vary throughout the length of the air channel 26, depending on the positions of the adjacent flutes 24 defining the air channel 26. Thus, a larger flute height *H_{F}* will produce larger air channels through the evaporative media pad, thereby increasing the air flow volume and velocity potential therethrough. However, having larger air channels also reduces the evaporative media pad's saturation potential and a larger air flow velocity causes an increased pressure drop across the evaporative media pad. Pressure drop is a term used to describe a resistance to air flow, and the greater the pressure drop, the more energy the system requires to preserve or achieve a desired air flow rate.

Industry standards for currently known evaporative media pads are a flute height of approximately 5 mm or approximately 7 mm. In contrast, the evaporative media pad 12 of the present Application has a flute height *H_{F}* of 4.5 mm or less and, in particular, a flute height *H_{F}* of 4 mm or less. In one embodiment, the flute height *H_{F}* is between 3 mm and 4.5 mm. In one embodiment, the flute height *H_{F}* is between 3.5 mm and 4.25 mm. In one embodiment, the flute height *H_{F}* is between 3.75 mm and 4 mm. The reduced flute height *H_{F},* and therefore reduced internal spacing, of the evaporative media pad 12, increases the saturation efficiency of the evaporative media pad 12. This increased volume of water retained by the evaporation media pad 12 allows for an increased amount of evaporation and, therefore, a higher cooling efficiency by the evaporative cooling system 10.

Further, the reduced internal spacing of the evaporative media pad 12 provides an increased surface area over which air and water are brought into contact, thereby increasing evaporation. Still further, the reduced internal spacing of the evaporative media pad 12 provides a reduced boundary layer thickness. The thickness of a boundary layer of air or vapor on the surfaces of the air channels 26 may impede or reduce heat transfer, and therefore affects the cooling efficiency and of the evaporative cooling system 10. The reduced internal spacing of the evaporative media pad 12 results in a slight increase in pressure drop within; however, the increased surface area and decreased boundary layer thickness nonetheless provide increased saturation efficiency and, therefore, cooling performance disproportionally to the power or energy required to overcome the increase in pressure drop. Put another way, the combination of the increased saturation efficiency, increased evaporation area (surface area), and reduced boundary layer thickness provide a multiplier effect that allows the evaporative cooling system 10 using the evaporative media pads 12 with decreased internal spacing to perform more efficiently than currently known systems operating at the same input power.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope and spirit of the invention, which is limited only by the following claims.

## Claims

1. An evaporative cooling system comprising:
a plurality of sheets forming an air-water contact body, each of the plurality of sheets including a plurality of flutes, each of the plurality of flutes having a flute height of at most 4.5 mm.

2. The evaporative cooling system of Claim 1, wherein the flute height is between 3 mm and 4.5 mm.

3. The evaporative cooling system of Claim 1, wherein the flute height is between 3.5 mm and 4.25 mm.

4. The evaporative cooling system of Claim 1, wherein the flute height is between 3.75 mm and 4 mm.

5. The evaporative cooling system of Claim 1, wherein each of the plurality of sheets is composed of cellulose paper.

6. The evaporative cooling system of Claim 1, wherein the flute height is at most 4 mm.

7. The evaporative cooling system of any of Claims 1-6, wherein the air-water contact body is an evaporative media pad, the evaporative cooling system further comprising a fluid distribution system configured to delivery fluid to the evaporative media pad.

8. The evaporative cooling system of any of Claims 1-6, wherein each of the plurality of sheets has a width and each of the plurality of flutes has a same height.

9. The evaporative cooling system of any of Claims 1-6, wherein each of the plurality of sheets has a width and each of the plurality of flutes extends across an entirety of the width of a corresponding one of the plurality of sheets.

10. The evaporative cooling system of Claim 1, wherein the air-water contact body is assembled such that the plurality of flutes of adjacent sheets of the plurality of sheets extend in different directions

11. The evaporative cooling system of Claim 1 or Claim 10, wherein each of the flutes extends in a direction that is at an angle from horizontal.

12. The evaporative cooling system of Claim 1, wherein the air-water contact body is assembled such that alternating sheets of the plurality of sheets include flutes extending in a first direction and at a first angle from horizontal and intervening sheets of the plurality of sheets between the alternating sheets of the plurality of sheets include flutes extending in a second direction and at a second angle from horizontal.

13. The evaporative cooling system of Claim 12, wherein:
the first direction and the second direction are different; and
the first angle and the second angle are the same.

14. The evaporative cooling system of Claim 12, wherein:
the first direction and the second direction are different; and
the first angle and the second angle are different.

15. The evaporative cooling system of Claim 1, wherein the air-water contact body is assembled such that the plurality of flutes of adjacent sheets of the plurality of sheets are in contact with each other.
